# EUROPEAN PATENT APPLICATION

(11) **EP 3 800 382 A1**
(43) Date of publication of application: **07.04.2021**
(21) Application number: 19843734.5
(22) Date of filing: 19.07.2019
(51) Int. Cl.: F16H 61/684, B60L 15/20, F16H 59/40, F16H 61/02, F16H 63/50

(54) **CONTROL DEVICE**

(30) Priority: 02.08.2018 JP 2018145880
(71) Applicant: AISIN AW CO., LTD., Fujiicho Anjo-shi Aichi 444-1192 (JP)
(72) Inventor: WATANABE, Ryo, Anjo-shi, Aichi 444-1192 (JP); SATO, Yasuyuki, Anjo-shi, Aichi 444-1192 (JP); KIMATA, Kenta, Anjo-shi, Aichi 444-1192 (JP); OTSUBO, Junichiro, Anjo-shi, Aichi 444-1192 (JP)
(74) Representative: TBK
(86) International application number: PCT/JP2019/028525
(87) International publication number: WO 2020/026858

(57) **Abstract**

A control target for a control device (3) is a vehicle drive device (1) having an automatic transmission (2) and an oil pump (OP) for driving the automatic transmission (2) which are provided in a power transmission path connecting a rotating electrical machine (MG) to a wheel (W1), the oil pump (OP) rotating at rotational speed determined based on wheel speed which is rotational speed of the wheel (W1). The control device (3) performs regeneration by the rotating electrical machine (MG) during transmission operation of the automatic transmission (2).

## Description

### TECHNICAL FIELD

The present invention relates to a control device whose control target is a vehicle drive device having an automatic transmission and an oil pump for driving the automatic transmission which are provided in a power transmission path connecting a rotating electrical machine to a wheel.

### BACKGROUND ART

An example of a control device such as that described above is described in JP H11-13878 A (Patent Literature 1). Reference signs shown in parentheses in description of the Background Art below are those of Patent Literature 1. In FIG. 1 of Patent Literature 1, there is disclosed a vehicle drive device having a transmission (10) and an oil pump (32) which are provided in a power transmission path connecting an electric motor (16) to wheels. As described in paragraphs 0023 and 0024 of Patent Literature 1, the control device is configured to drive the transmission (10) using hydraulic pressure generated by the oil pump (32).

Meanwhile, though not described in Patent Literature 1, in a vehicle drive device thus provided with a rotating electrical machine as a drive power source for wheels, for example, deceleration energy generated upon deceleration of a vehicle can be regenerated by the rotating electrical machine. It is desired to secure a large amount of regeneration upon thus regenerating energy by the rotating electrical machine.

### CITATIONS LIST

### PATENT LITERATURE

Patent Literature 1: JP H11-13878 A

### SUMMARY OF INVENTION

### TECHNICAL PROBLEMS

Hence, there is a demand for implementing a technique that enables a vehicle drive device having an automatic transmission and an oil pump for driving the automatic transmission which are provided in a power transmission path connecting a rotating electrical machine to a wheel to secure a large amount of regeneration of energy by the rotating electrical machine.

### SOLUTIONS TO PROBLEMS

A control device according to the present disclosure is a control device whose control target is a vehicle drive device having an automatic transmission and an oil pump for driving the automatic transmission, the oil pump rotating at rotational speed determined based on wheel speed, the automatic transmission and the oil pump being provided in a power transmission path connecting a rotating electrical machine to a wheel, and the wheel speed being rotational speed of the wheel, and regeneration by the rotating electrical machine is performed during transmission operation of the automatic transmission.

According to the above-described configuration, regeneration control that allows the rotating electrical machine to output regeneration torque is performed during transmission operation of the automatic transmission. Thus, compared to a case in which regeneration control is not performed during transmission operation, opportunities to perform regeneration control increase, making it possible to secure a large amount of regeneration of energy (e.g., deceleration energy) by the rotating electrical machine.

Further features and advantages of the control device will become apparent from the following description of embodiments which will be described with reference to drawings.

### BRIEF DESCRIPTION OF DRAWINGS

FIG. 1 is a diagram showing a schematic configuration of a vehicle drive device according to an embodiment.
FIG. 2 is a time chart showing an example of control behavior of downshifting control according to the embodiment.
FIG. 3 is a time chart showing an example of control behavior of downshifting control according to another embodiment.

### DESCRIPTION OF EMBODIMENTS

Embodiments of a control device will be described with reference to the drawings. Note that in this specification, a "rotating electrical machine" is used as a concept that includes all of a motor, a generator, and a motor-generator that functions as both a motor and a generator as necessary. Note also that in this specification, "drive-coupled" refers to a state in which two rotating elements are coupled together such that they can transmit drive power. This concept includes a state in which two rotating elements are coupled together such that they rotate together, and a state in which two rotating elements are coupled together through one or more power transmission members such that they can transmit drive power. Such power transmission members include various types of members (shafts, gear mechanisms, belts, chains, etc.) that transmit rotation at the same speed or at a changed speed, and may include engagement devices (friction engagement devices, mesh engagement devices, etc.) that selectively transmit rotation and drive power.

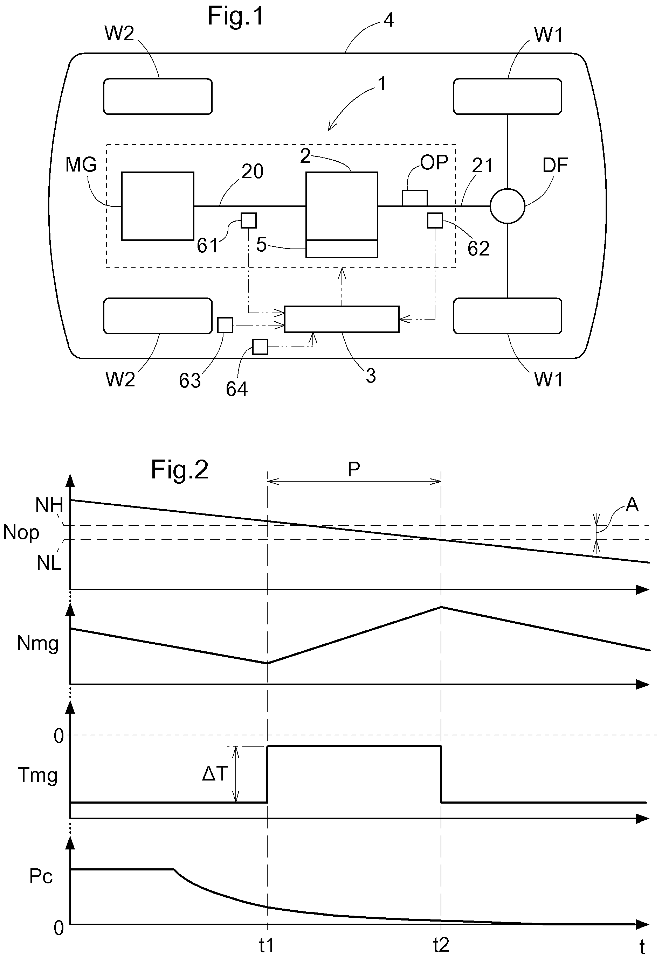

As shown in FIG. 1, a control device 3 is a control device whose control target is a vehicle drive device 1 having an automatic transmission 2 and an oil pump OP for driving the automatic transmission 2 which are provided in a power transmission path connecting a rotating electrical machine MG to first wheels W1, and the oil pump OP rotates at rotational speed determined based on wheel speed which is rotational speed of the first wheels W1. The vehicle drive device 1 allows a vehicle 4 having the vehicle drive device 1 mounted thereon to travel by transmitting output torque Tmg from the rotating electrical machine MG to the first wheels W1. In the present embodiment, the power transmission path is provided so as to connect the rotating electrical machine MG to the two left and right first wheels W1, and the vehicle drive device 1 transmits output torque Tmg from the rotating electrical machine MG to the two left and right first wheels W1. Specifically, the vehicle drive device 1 includes a differential gear device DF (output differential gear device) between the automatic transmission 2 and the two left and right first wheels W1 in the above-described power transmission path. The differential gear device DF distributes and transmits rotation and torque which are inputted from a rotating electrical machine MG side (automatic transmission 2 side) to the two left and right first wheels W1. In the present embodiment, the first wheel W1 corresponds to a "wheel".

In the present embodiment, the vehicle 4 is provided with second wheels W2 which are independent of the power transmission path connecting the rotating electrical machine MG to the first wheels W1. Either ones of the first wheels W1 and the second wheels W2 are front wheels of the vehicle 4, and the other ones of the first wheels W1 and the second wheels W2 are rear wheels of the vehicle 4. In the present embodiment, the vehicle drive device 1 does not include any other drive power source for the first wheels W1 than the rotating electrical machine MG, and does not include a drive power source for the second wheels W2, either. Namely, in the present embodiment, the vehicle drive device 1 is a drive device for an electric motor vehicle (electric vehicle).

Though depiction is omitted, the rotating electrical machine MG includes a stator fixed to a non-rotating member such as a case; and a rotor which is rotatably supported on the stator. Here, the rotating electrical machine MG is an alternating-current rotating electrical machine which is driven by alternating current (e.g., three-phase alternating current). The rotating electrical machine MG is electrically connected to an electrical storage device such as a battery or a capacitor through an inverter that converts electric power between direct-current electric power and alternating-current electric power, and performs motoring by receiving electric power supply from the electrical storage device, or supplies and stores electric power generated by inertial force, etc., of the vehicle 4 in the electrical storage device. Note that in this specification, for the positive and negative signs of torque such as output torque Tmg from the rotating electrical machine MG, torque in a direction in which the vehicle 4 moves forward is a positive torque, and torque in an opposite direction to the positive torque is a negative torque. Note also that in this specification, the magnitude of torque such as output torque Tmg from the rotating electrical machine MG is magnitude taking into account signs (positive and negative) instead of an absolute value. Namely, minimum torque that can be outputted from the rotating electrical machine MG is a negative torque having a maximum absolute value, and maximum torque that can be outputted from the rotating electrical machine MG is a positive torque having a maximum absolute value.

The automatic transmission 2 changes the speed of rotation of an input member 20 and transmits the rotation to an output member 21. The input member 20 is drive-coupled to the rotating electrical machine MG, and the output member 21 is drive-coupled to the first wheels W1. In the present embodiment, the input member 20 is coupled to the rotating electrical machine MG (specifically, the rotor of the rotating electrical machine MG) such that they rotate together. In addition, in the present embodiment, the output member 21 is coupled to the first wheels W1 through the above-described differential gear device DF.

The automatic transmission 2 is a stepped automatic transmission that can form a plurality of shift speeds having different gear ratios, and changes the speed of rotation of the input member 20 at a gear ratio determined based on a formed shift speed, and transmits the rotation to the output member 21. Here, a shift speed having the largest gear ratio among the plurality of shift speeds that can be formed by the automatic transmission 2 is a "minimum shift speed". Note that the "gear ratio" is a ratio of the rotational speed of the input member 20 to the rotational speed of the output member 21. Though depiction is omitted, the automatic transmission 2 includes a plurality of transmission engagement devices, and forms any of the plurality of shift speeds according to a state of engagement of each transmission engagement device. As the automatic transmission 2, a planetary gear automatic transmission which is constructed by using a single or a plurality of planetary gear mechanisms can be used. In this case, by controlling a differential state of each planetary gear mechanism by the transmission engagement devices, a shift speed to be formed is changed. Alternatively, as the automatic transmission 2, a parallel-shaft gear automatic transmission having a configuration in which a plurality of gears coupled to a plurality of parallel shafts mesh with each other may be used.

The transmission engagement devices are, for example, friction engagement devices, mesh engagement devices, or one-way clutches (one-way engagement devices). Here, the one-way clutches include not only a one-way clutch with a fixed rotation restriction direction, but also a one-way clutch with a switchable rotation restriction direction (a selectable one-way clutch, a two-way clutch, etc.). Here, the selectable one-way clutch is a clutch configured to be able to switch between a one-direction restricted state in which rotation in one direction of a rotating member (a restriction-target rotating member, the same applies hereinafter) is restricted and a rotation restricted state in which rotation in both directions of the rotating member is restricted. In addition, the two-way clutch is a clutch configured to be able to switch between an other-direction restricted state in which rotation in the other direction of the rotating member is restricted and a restriction invalid state in which rotation in both directions of the rotating member is allowed, in addition to the one-direction restricted state and the rotation restricted state.

The oil pump OP is driven by power transmitted through the power transmission path connecting the rotating electrical machine MG to the first wheels W1. Namely, the oil pump OP is a so-called mechanical oil pump. As the oil pump OP, for example, an internal gear pump, an external gear pump, a vane pump, etc., can be used. As shown in FIG. 1, in the present embodiment, the oil pump OP is provided more on a first wheels W1 side than the automatic transmission 2 in the above-described power transmission path. Thus, the oil pump OP rotates at rotational speed determined based on wheel speed, but in the present embodiment, a ratio between the rotational speed Nop of the oil pump OP and the wheel speed does not change depending on a state of the automatic transmission 2 (e.g., a formed shift speed). Here, the oil pump OP is inseparably coupled to the first wheels W1 and is always driven in conjunction with the rotation of the first wheels W1. Namely, the oil pump OP is driven by the rotation of a rotating member (e.g., the output member 21) which is inseparably coupled to the first wheels W1. Note that when the oil pump OP is disposed on a different shaft than the rotating member, these two members are coupled together through a gear mechanism, a winding power transmission mechanism, etc.

Meanwhile, the rotating electrical machine MG is used as a drive power source for the first wheels W1, and thus, the rotational speed of the rotating electrical machine MG changes depending on wheel speed, and in a high wheel speed state, the maximum rotational speed of the rotating electrical machine MG is also likely to get high. Regarding this respect, in the present embodiment, the oil pump OP is provided more on the first wheels W1 side than the automatic transmission 2 in the above-described power transmission path, and the gear ratio of the automatic transmission 2 is often a reduction, and thus, compared to a case in which the oil pump OP is provided more on the rotating electrical machine MG side than the automatic transmission 2 in the above-described power transmission path, it is easy to adopt a configuration in which the oil pump OP is driven by a rotating member with a low maximum rotational speed (e.g., the output member 21). Thus, as the oil pump OP, one that is generally used in an automobile, etc., is conveniently used. In addition, there is no need to secure a large speed reducing ratio between the rotating member that drives the oil pump OP and the oil pump OP, and accordingly, a power transmission mechanism between these two members can be simplified, making it easy to secure space where the oil pump OP is disposed.

As shown in FIG. 1, the vehicle drive device 1 includes a hydraulic pressure control device 5 (hydraulic circuit) that controls the hydraulic pressure of oil discharged from the oil pump OP to supply the hydraulic pressure to at least the automatic transmission 2. The transmission engagement devices included in the automatic transmission 2 are hydraulically actuated engagement devices. Note that the transmission engagement devices used here do not include a one-way clutch with a fixed rotation restriction direction. Hereinafter, the same applies to this paragraph. The control device 3 controls a state of engagement of each transmission engagement device by controlling, through the hydraulic pressure control device 5, hydraulic pressure supplied to hydraulic actuating parts (hydraulic servomechanisms, etc.) of the respective transmission engagement devices. Though details are omitted, the hydraulic pressure control device 5 includes a plurality of hydraulic pressure control valves that control the hydraulic pressure of oil discharged from the oil pump OP, and hydraulic pressure supplied to the hydraulic actuating parts of the respective transmission engagement devices is controlled by adjusting the degree of opening of each hydraulic pressure control valve in response to a hydraulic pressure instruction signal outputted from the control device 3.

In the present embodiment, the vehicle 4 (vehicle drive device 1) is not provided with any other oil pump that generates hydraulic pressure to be supplied to the automatic transmission 2 than the oil pump OP. Hence, it is preferred to use, as the automatic transmission 2, a transmission configured not to require hydraulic pressure for maintaining a state in which the minimum shift speed is formed (excluding hydraulic pressure for lubrication and cooling), regardless of whether the output torque Tmg from the rotating electrical machine MG is positive or negative. For example, by using a normally closed engagement device which is engaged in a state in which hydraulic pressure is not supplied to a hydraulic actuating part, a mesh engagement device in which the position of a sleeve for switching a state of engagement is held in a state in which hydraulic pressure is not supplied to a hydraulic actuating part, or a one-way clutch in which a switching state of a rotation restriction direction is held in a state in which hydraulic pressure is not supplied to a hydraulic actuating part, as a transmission engagement device that is engaged to form the minimum shift speed, a configuration that does not require hydraulic pressure for maintaining a state in which the minimum shift speed is formed can be implemented. Note that it is also possible to adopt a configuration in which an oil pump that is driven by a drive power source independent of the power transmission path connecting the rotating electrical machine MG to the first wheels W1 (e.g., a motor-driven oil pump that is driven by an electric motor) is provided separately from the oil pump OP in order to generate hydraulic pressure to be supplied to the automatic transmission 2.

The control device 3 includes, as a core member, an arithmetic processing device such as a central processing unit (CPU) and includes storage devices that can be referred to by the arithmetic processing device, such as a random access memory (RAM) and a read only memory (ROM). Each function of the control device 3 is implemented by software (programs) stored in a storage device such as the ROM, hardware such as an arithmetic circuit provided separately, or both of them. The arithmetic processing device included in the control device 3 operates as a computer that executes each program. The control device 3 may include a set of a plurality of pieces of hardware (a plurality of separated pieces of hardware) that can communicate with each other. For example, a function of the control device 3 of controlling the rotating electrical machine MG and a function of the control device 3 of controlling the hydraulic pressure control device 5 may be implemented separately by a plurality of pieces of hardware that can communicate with each other. In addition, when the control device 3 thus includes a set of a plurality of pieces of hardware that can communicate with each other, a configuration can also be adopted in which the control device 3 is separated into an in-vehicle device mounted on the vehicle 4 and an out-of-vehicle device which is provided external to the vehicle 4 and can communicate with the in-vehicle device through a communication network (e.g., the Internet), and at least one of the functions of the control device 3 is provided in the out-of-vehicle device.

The vehicle 4 includes various types of sensors, and the control device 3 is configured to be able to obtain detection information (sensor detection information) of the various types of sensors. In the present embodiment, as shown in FIG. 1, the plurality of sensors whose detection information can be obtained by the control device 3 include a first sensor 61, a second sensor 62, a third sensor 63, and a fourth sensor 64.

The first sensor 61 is a sensor for obtaining rotational speed Nmg of the rotating electrical machine MG, and the control device 3 obtains rotational speed Nmg of the rotating electrical machine MG based on detection information of the first sensor 61. In the present embodiment, the first sensor 61 is provided so as to detect rotational speed of the input member 20, and the control device 3 obtains rotational speed Nmg of the rotating electrical machine MG based on the rotational speed of the input member 20 detected by the first sensor 61.

The second sensor 62 is a sensor for obtaining vehicle speed which is travel speed of the vehicle 4, and the control device 3 obtains vehicle speed based on detection information of the second sensor 62. In the present embodiment, the second sensor 62 is provided so as to detect rotational speed of the output member 21, and the control device 3 obtains vehicle speed based on the rotational speed of the output member 21 detected by the second sensor 62. Note that the configuration may be such that the second sensor 62 is provided so as to detect rotational speed of the first wheels W1 or a rotating member (a drive shaft, etc.) that rotates together with the first wheels W1, and the control device 3 obtains vehicle speed based on detection information (detection information of wheel speed which is the rotational speed of the first wheels W1) of the second sensor 62.

The third sensor 63 is a sensor for obtaining an accelerator pedal position, and the control device 3 obtains an accelerator pedal position based on detection information of the third sensor 63. In the present embodiment, the third sensor 63 is provided so as to detect the amount of operation on an accelerator pedal provided on the vehicle 4, and the control device 3 obtains an accelerator pedal position based on the amount of operation on the accelerator pedal detected by the third sensor 63.

The fourth sensor 64 is a sensor for obtaining the amount of brake operation, and the control device 3 obtains the amount of brake operation based on detection information of the fourth sensor 64. In the present embodiment, the fourth sensor 64 is provided so as to detect the amount of operation on a brake pedal provided on the vehicle 4, and the control device 3 obtains the amount of brake operation based on the amount of operation on the brake pedal detected by the fourth sensor 64.

The control device 3 determines a target shift speed of the automatic transmission 2 and target torque of the rotating electrical machine MG based on sensor detection information by, for example, referring to a control map. The control device 3 controls the automatic transmission 2 to form the determined target shift speed. Specifically, the control device 3 controls the automatic transmission 2 to form the determined target shift speed by outputting a hydraulic pressure instruction signal for controlling a state of engagement of each transmission engagement device to the hydraulic pressure control device 5. In addition, the control device 3 controls the rotating electrical machine MG to output the determined target torque. Specifically, the control device 3 controls the rotating electrical machine MG to output the target torque by controlling an operating point (rotational speed Nmg and output torque Tmg) of the rotating electrical machine MG through the inverter.

When the rotating electrical machine MG generates electric power during forward travel of the vehicle 4 (i.e., in a state in which the rotational speed Nmg of the rotating electrical machine MG is positive), the target torque is set to a negative torque. Namely, when regeneration control that allows the rotating electrical machine MG to output regeneration torque is performed during forward travel of the vehicle 4, the regeneration torque is a negative torque. When the control device 3 performs regeneration control of the rotating electrical machine MG during a reduction in wheel speed (i.e., when the control device 3 performs regeneration of deceleration energy by the rotating electrical machine MG), the control device 3 allows a braking device (a disc braking device, etc.) for wheels (the first wheels W1 or the second wheels W2) to operate as necessary. Namely, the control device 3 controls each of the rotating electrical machine MG and the braking device such that the sum of braking force produced by regeneration and braking force produced by the braking device is braking force based on a target level of speed reduction. Note that the target level of speed reduction is determined, for example, based on wheel speed and the amount of brake operation.

The control device 3 is configured to perform regeneration by the rotating electrical machine MG during transmission operation of the automatic transmission 2. The following describes a case in which the control device 3 performs regeneration by the rotating electrical machine MG during downshifting operation of the automatic transmission 2, but the control device 3 may perform regeneration by the rotating electrical machine MG during upshifting operation of the automatic transmission 2. Namely, the following describes operations of downshifting control performed by the control device 3. The control device 3 of the present embodiment is characterized by operations of control performed when performing downshifting which is shifting of a shift speed formed by the automatic transmission 2 to the minimum shift speed during a reduction in wheel speed with the shift speed having a smaller gear ratio than the minimum shift speed formed. In the following description, downshifting which is shifting of a shift speed formed by the automatic transmission 2 from the shift speed having a smaller gear ratio than the minimum shift speed (e.g., a shift speed adjacent to a high shift speed side) to the minimum shift speed is simply referred to as "downshifting". In addition, the following describes downshifting performed during a reduction in wheel speed.

When the control device 3 performs downshifting during a reduction in wheel speed with a shift speed having a smaller gear ratio than the minimum shift speed formed, the control device 3 performs the downshifting in a time frame (period) during which the rotational speed Nop of the oil pump OP is maintained higher than or equal to a reference rotational speed NL and reduced to the reference rotational speed NL during a period from start to completion of downshifting operation (see FIG. 2). Here, the "reference rotational speed NL" is a lower limit of the rotational speed of the oil pump OP at which minimum hydraulic pressure required for transmission operation (here, downshifting operation) of the automatic transmission 2 is generated. Namely, when a rotational speed range of the oil pump OP in which minimum hydraulic pressure required for the transmission operation of the automatic transmission 2 is generated is a reference rotational speed range A, the reference rotational speed NL is a lower limit of the reference rotational speed range A. In FIG. 2, an upper limit of the reference rotational speed range A is indicated by "NH". In addition, "performance of downshifting" used here refers to performance of at least operation requiring hydraulic pressure which is included in downshifting operation. Namely, when a downshifting operating period includes a period during which only operation that does not require hydraulic pressure is performed, the operation that does not require hydraulic pressure may be performed in a different time frame than the above-described time frame.

The minimum hydraulic pressure required for the transmission operation of the automatic transmission 2 is determined according to a configuration of the automatic transmission 2, and the reference rotational speed NL and the reference rotational speed range A in which the minimum hydraulic pressure is generated are determined according to a configuration (performance) of the oil pump OP. Here, a transmission engagement device that is disengaged to shift a shift speed to the minimum shift speed is a "disengaged-side engagement device", and a transmission engagement device that is engaged to shift the shift speed to the minimum shift speed is an "engaged-side engagement device". Hydraulic pressure required for downshifting operation includes, for example, hydraulic pressure for switching a state of engagement of a disengaged-side engagement device from an engaged state to a disengaged state or hydraulic pressure for switching a state of engagement of an engaged-side engagement device from a disengaged state to an engaged state, or includes both of the hydraulic pressure.

By performing downshifting in a time frame during which the rotational speed Nop of the oil pump OP is maintained higher than or equal to the reference rotational speed NL as described above, hydraulic pressure required for downshifting operation is appropriately secured, enabling the downshifting operation to appropriately proceed. Then, by performing downshifting in a time frame during which the rotational speed Nop of the oil pump OP is reduced to the reference rotational speed NL during a period from start to completion of the downshifting operation as described above, when regeneration control of the rotating electrical machine MG is performed, a large amount of regeneration of deceleration energy can be secured as will be described later.

Namely, as a period from time t1 to t2 in FIG. 2 which will be referred to later, a downshifting operating period includes a rotation change period P (inertia phase) during which the rotational speed Nmg of the rotating electrical machine MG increases to rotational speed obtained after shifting to the minimum shift speed (hereinafter referred to as "rotational speed after shifting"). In the rotation change period P, in order to allow the rotating electrical machine MG to output at least a part of torque (inertia torque) for increasing the rotational speed of the rotating electrical machine MG to the rotational speed after shifting, output torque Tmg from the rotating electrical machine MG is corrected to a side toward which regeneration torque decreases (i.e., a positive torque side). The amount of correction ΔT of the output torque Tmg at this time generally increases as the amount of change in the rotational speed Nmg of the rotating electrical machine MG in the rotation change period P increases. As such, in the present embodiment, the control device 3 is configured to perform, during transmission operation of the automatic transmission 2, control to correct the output torque Tmg from the rotating electrical machine MG such that the rotating electrical machine MG outputs torque for synchronizing the rotational speed Nmg of the rotating electrical machine MG to rotational speed obtained after shifting the gear ratio of the automatic transmission 2.

The amount of change in the rotational speed Nmg of the rotating electrical machine MG in the rotation change period P decreases as wheel speed upon performing downshifting decreases, i.e., as the rotational speed Nop of the oil pump OP upon performing downshifting decreases. Thus, by performing, as described above, downshifting in a time frame during which the rotational speed Nop of the oil pump OP is reduced to the reference rotational speed NL during a period from start to completion of downshifting operation, the rotational speed Nop of the oil pump OP upon performing the downshifting can be reduced to the lowest possible level in a range in which the downshifting can be appropriately performed. By this, the amount of change in the rotational speed Nmg of the rotating electrical machine MG in the rotation change period P can be suppressed to a small level. As a result, the amount of correction ΔT in the output torque Tmg from the rotating electrical machine MG is suppressed to a small level, making it possible to secure a large amount of regeneration of deceleration energy.

When, unlike such a configuration, the amount of change in the rotational speed Nmg of the rotating electrical machine MG in the rotation change period P is large, regeneration control that allows the rotating electrical machine MG to output regeneration torque (here, a negative torque) so that the rotational speed Nmg of the rotating electrical machine MG reaches the rotational speed after shifting in the rotation change period P may not be able to be performed in the rotation change period P. On the other hand, by suppressing the amount of change in the rotational speed Nmg of the rotating electrical machine MG in the rotation change period P to a small level as described above, regeneration control can be performed even in the rotation change period P, and compared to a case in which regeneration control cannot be performed in the rotation change period P, a large amount of regeneration of deceleration energy can be secured. As such, the control device 3 is configured to perform regeneration by the rotating electrical machine MG in a period including the rotation change period P, during transmission operation of the automatic transmission 2.

Meanwhile, as the level of reduction in wheel speed increases, the reduction rate per unit time of the rotational speed Nop of the oil pump OP also increases. In view of this fact, the control device 3 is configured to determine a point in time when downshifting starts, according to the level of reduction in wheel speed such that the rotational speed Nop of the oil pump OP upon start of the downshifting (hereinafter, referred to as "start determination rotational speed") increases as the level of reduction in wheel speed increases, by which the downshifting can be performed in the above-described time frame. Here, the "above-described time frame" is a time frame during which the rotational speed Nop of the oil pump OP is maintained higher than or equal to the reference rotational speed NL and reduced to the reference rotational speed NL during a period from start to completion of downshifting operation, and the same applies hereinafter. Start determination rotational speed for performing downshifting in the above-described time frame can be derived based on the level of reduction in wheel speed and operating time which is time required for downshifting operation (hereinafter, referred to as "downshifting operating time"). Thus, when the downshifting operating time can be considered to have a fixed value (certain value), for example, the control device 3 can be configured to determine a point in time when the rotational speed Nop of the oil pump OP is reduced to the start determination rotational speed, as a point in time when downshifting starts, by referring to a map that defines a relationship between the level of reduction in wheel speed and the start determination rotational speed.

Note that the downshifting operating time is time from a start point in time to a completion point in time of downshifting operation. The start point in time of downshifting operation can be, for example, a point in time when the control device 3 starts to output a hydraulic pressure instruction signal for downshifting. In addition, the completion point in time of downshifting operation can be, for example, a point in time when both of the gear ratio and a torque ratio (a ratio of torque inputted to the input member 20 to torque outputted from the output member 21) go into a minimum shift speed state. Note that when all operation requiring hydraulic pressure which is included in the downshifting operation is completed before a mid-point in time of the downshifting operating period, the downshifting operating time may be time from a start point in time to the above-described mid-point in time of the downshifting operation.

The downshifting operating time can change depending on oil temperature. In general, the downshifting operating time tends to increase as the oil temperature decreases. Besides the oil temperature, the downshifting operating time can also change depending on line pressure. Note that the line pressure is reference hydraulic pressure of a hydraulic pressure control circuit which is set according to the magnitude of transmission torque of the automatic transmission 2. In view of this fact, instead of downshifting operating time having a fixed value, the control device 3 may be configured to predict downshifting operating time based on one or more determination indices including oil temperature (e.g., oil temperature and line pressure), and determine a point in time when downshifting starts, according to the level of reduction in wheel speed and the downshifting operating time such that the rotational speed Nop of the oil pump OP upon start of the downshifting (start determination rotational speed) increases as the level of reduction in wheel speed increases and that the start determination rotational speed increases as the operating time increases. In this case, for example, the control device 3 can be configured to determine a point in time when the rotational speed Nop of the oil pump OP is reduced to the start determination rotational speed, as a point in time when the downshifting starts, by referring to a map that defines a relationship between the level of reduction in wheel speed and the downshifting operating time, and the start determination rotational speed.

In addition, the control device 3 may be configured to determine a point in time when downshifting starts, based on a point in time when the rotational speed Nop of the oil pump OP based on a change in wheel speed is predicted to be reduced to the reference rotational speed range A (specifically, the reference rotational speed NL) (hereinafter, referred to as "reduction prediction time point") and downshifting operating time. In this case, the control device 3 determines a point in time when the downshifting starts, based on the reduction prediction time point and the downshifting operating time such that the downshifting is performed in the above-described time frame. Note that the reduction prediction time point is earlier as the level of reduction in wheel speed increases, and accordingly, the rotational speed Nop of the oil pump OP upon start of downshifting (start determination rotational speed) increases. Thus, by determining a point in time when downshifting starts, based on the reduction prediction time point and the downshifting operating time, it becomes possible, as described above, to determine a point in time when downshifting starts, such that the start determination rotational speed increases as the level of reduction in wheel speed increases and that the start determination rotational speed increases as the operating time increases.

In the present embodiment, since the oil pump OP is provided more on the first wheels W1 side than the automatic transmission 2 in the power transmission path connecting the rotating electrical machine MG to the first wheels W1, the rotational speed Nop of the oil pump OP decreases according to a reduction in wheel speed, including also during downshifting operation. In view of this fact, in the present embodiment, the control device 3 is configured to start downshifting at a point in time ahead, by downshifting operating time, of a point in time when the rotational speed Nop of the oil pump OP is predicted to be reduced to the reference rotational speed range A (specifically, the reference rotational speed NL). Namely, in the present embodiment, the control device 3 performs downshifting with the aim of completing downshifting operation when the rotational speed Nop of the oil pump OP is reduced to the reference rotational speed range A (specifically, the reference rotational speed NL). By this, it becomes easy to reduce the rotational speed Nop of the oil pump OP upon performing downshifting to the lowest possible level in a range in which the downshifting can be appropriately performed.

Next, specific operations of downshifting control according to the present embodiment will be described with reference to an example shown in FIG. 2. Here, a situation in which downshifting is performed during deceleration travel with the accelerator pedal position being zero, i.e., a situation in which power-off downshifting is performed, is assumed. In addition, here, a situation is assumed in which by performing, during deceleration travel, regeneration control that allows the rotating electrical machine MG to output regeneration torque (negative torque), regeneration of deceleration energy is performed. Note that such regeneration control may be performed not only when the amount of brake operation is greater than zero, but also when the amount of brake operation is zero. Note also that here the automatic transmission 2 is a transmission configured not to require hydraulic pressure for forming the minimum shift speed, and a situation is assumed in which along with a reduction in hydraulic pressure (hydraulic pressure indicated by "Pc" in FIG. 2) supplied to a transmission engagement device for forming a shift speed having a smaller gear ratio than the minimum shift speed, a shift speed formed by the automatic transmission 2 shifts from the shift speed having a smaller gear ratio than the minimum shift speed to the minimum shift speed.

In the example shown in FIG. 2, in a period prior to time t1, the wheel speed decreases with a shift speed having a smaller gear ratio than the minimum shift speed formed. According to the reduction in wheel speed, the rotational speed Nop of the oil pump OP decreases and the rotational speed Nmg of the rotating electrical machine MG decreases. Then, it is determined at a point in time prior to time t1 to perform downshifting, by which the downshifting starts.

Here, a point in time when the rotational speed Nop of the oil pump OP is predicted to be reduced to the reference rotational speed NL (reduction prediction time point) is time t2, and downshifting starts at a point in time (depiction is omitted) ahead, by downshifting operating time, of the reduction prediction time point (time t2).

In the example shown in FIG. 2, after starting downshifting, a rotation change period P starts at time t1. In the rotation change period P, as described above, the rotating electrical machine MG is controlled to output torque for increasing the rotational speed Nmg of the rotating electrical machine MG to rotational speed obtained after shifting to the minimum shift speed. Thus, in the rotation change period P, output torque Tmg from the rotating electrical machine MG is corrected to the positive torque side from output torque Tmg obtained in a previous period by an amount of torque (the amount of correction ΔT) for increasing the rotational speed Nmg. In this example, the correction is continuously made until time t2 at which the rotation change period P ends. Note that by thus allowing the rotating electrical machine MG to output at least a part of torque for increasing the rotational speed Nmg of the rotating electrical machine MG, for example, even when the engagement pressure of an engaged-side engagement device is increased to increase the rotational speed Nmg of the rotating electrical machine MG, the load on the engaged-side engagement device can be reduced by an amount corresponding to the amount of correction ΔT.

Then, at time t2, the rotation change period P ends and downshifting operation is completed. In the example shown in FIG. 2, a situation is assumed in which even in a period after time t2 which is a period after the completion of the downshifting operation, the wheel speed continues to decrease, and in this period, too, regeneration of deceleration energy by the rotating electrical machine MG is continuously performed. Note that since the shift speed shifts to the minimum shift speed in downshifting, in a situation in which the wheel speed continues to decrease after completion of downshifting operation, even if the rotational speed Nop of the oil pump OP falls below the reference rotational speed NL, there is no particular problem.

### [Other Embodiments]

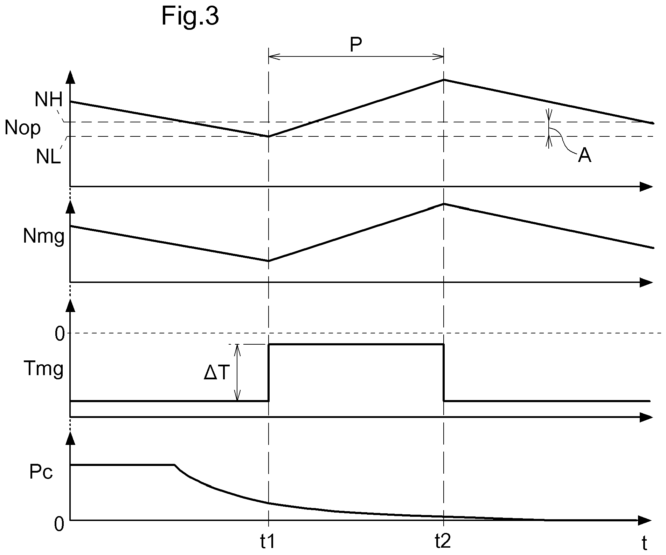

Next, other embodiments of a control device will be described.
(1) The above-described embodiment describes, as an example, a configuration in which the oil pump OP is provided more on the first wheels W1 side than the automatic transmission 2 in a power transmission path connecting the rotating electrical machine MG to the first wheels W1. However, the configuration is not limited thereto, and a configuration can also be adopted in which the oil pump OP is provided more on the rotating electrical machine MG side than the automatic transmission 2 in the above-described power transmission path. In this case, as in the above-described embodiment, the oil pump OP rotates at rotational speed determined based on wheel speed, but unlike the above-described embodiment, a ratio between the rotational speed Nop of the oil pump OP and the wheel speed changes depending on a state of the automatic transmission 2 (e.g., a formed shift speed).
   A specific example of downshifting control performed when the oil pump OP is thus provided more on the rotating electrical machine MG side than the automatic transmission 2 in the above-described power transmission path is shown in FIG. 3. In FIG. 3, as in the example shown in FIG. 2, a situation in which downshifting control is performed is assumed. Hence, FIG. 3 differs from FIG. 2 only in the behavior of the rotational speed Nop of the oil pump OP. Specifically, in the example shown in FIG. 3, at time t1 which is a start time point of a rotation change period P, the rotational speed Nop of the oil pump OP is reduced to the reference rotational speed NL, and in the rotation change period P, the rotational speed Nmg of the rotating electrical machine MG increases, and accordingly, the rotational speed Nop of the oil pump OP also increases. Hence, in this example, downshifting starts at a point in time (depiction is omitted) ahead, by time obtained by subtracting the duration of the rotation change period P from downshifting operating time, of a point in time (specifically, time t1) when the rotational speed Nop of the oil pump OP is predicted to be reduced to the reference rotational speed NL. When the oil pump OP is thus provided more on the rotating electrical machine MG side than the automatic transmission 2 in the above-described power transmission path, the rotational speed Nop of the oil pump OP can be increased in the rotation change period P, and accordingly, it becomes easy to secure hydraulic pressure after completion of downshifting operation.
(2) The above-described embodiment describes, as an example, a configuration in which the vehicle drive device 1 does not include any other drive power source for the first wheels W1 than the rotating electrical machine MG, and does not include a drive power source for the second wheels W2, either. However, the configuration is not limited thereto, and it is also possible to adopt a configuration in which the vehicle drive device 1 includes a drive power source (e.g., an internal combustion engine) for the first wheels W1 separately from the rotating electrical machine MG, or a configuration in which the vehicle drive device 1 includes a drive power source (e.g., a rotating electrical machine or an internal combustion engine) for the second wheels W2.
(3) The above-described embodiment describes, as an example, a configuration in which a power transmission path is provided so as to connect the rotating electrical machine MG to the two left and right first wheels W1. However, the configuration is not limited thereto, and for example, a configuration can also be adopted in which a power transmission path is provided so as to connect the rotating electrical machine MG to one first wheel W1. In this case, a configuration can be adopted in which at least a part of the case of the rotating electrical machine MG is disposed in space on a radial inner side of the first wheel W1 (i.e., a configuration in which the rotating electrical machine MG is an in-wheel type rotating electrical machine).
(4) Note that a configuration disclosed in each of the above-described embodiments can also be applied in combination with a configuration disclosed in another embodiment (including a combination of embodiments described as other embodiments) as long as a contradiction does not arise. For other configurations, too, the embodiments disclosed in this specification are in all respects merely illustrative. Thus, various modifications can be made therein as appropriate without departing from the true spirit and scope of the present disclosure.

### [Summary of the Above-Described Embodiments]

A summary of the control device described above will be described below.

In a control device (3) whose control target is a vehicle drive device (1) having an automatic transmission (2) and an oil pump (OP) for driving the automatic transmission (2) which are provided in a power transmission path connecting a rotating electrical machine (MG) to a wheel (W1), the oil pump (OP) rotating at rotational speed determined based on wheel speed which is rotational speed of the wheel (W1), regeneration by the rotating electrical machine (MG) is performed during transmission operation of the automatic transmission (2).

According to the above-described configuration, regeneration control that allows the rotating electrical machine (MG) to output regeneration torque is performed during transmission operation of the automatic transmission (2). Thus, compared to a case in which regeneration control is not performed during transmission operation, opportunities to perform regeneration control increase, making it possible to secure a large amount of regeneration of energy (e.g., deceleration energy) by the rotating electrical machine (MG).

Here, it is preferred that during the transmission operation of the automatic transmission (2), control be performed to correct output torque (Tmg) from the rotating electrical machine (MG) such that the rotating electrical machine (MG) outputs torque for synchronizing rotational speed (Nmg) of the rotating electrical machine (MG) to rotational speed obtained after shifting a gear ratio of the automatic transmission (2).

According to this configuration, by performing control to correct output torque (Tmg) from the rotating electrical machine (MG), transmission operation of the automatic transmission (2) can appropriately proceed.

In addition, when downshifting is performed during a reduction in the wheel speed with a shift speed having a smaller gear ratio than a minimum shift speed formed, the downshifting being shifting of a shift speed formed by the automatic transmission (2) to the minimum shift speed, and the minimum shift speed being a shift speed having the largest gear ratio among a plurality of shift speeds that can be formed by the automatic transmission (2), the downshifting is performed in a time frame during which rotational speed (Nop) of the oil pump (OP) is maintained higher than or equal to a reference rotational speed (NL) and reduced to the reference rotational speed (NL) during a period from start to completion of operation of the downshifting, the reference rotational speed (NL) being a lower limit of rotational speed of the oil pump (OP) at which minimum hydraulic pressure required for the transmission operation of the automatic transmission (2) is generated.

In the vehicle drive device (1), the oil pump (OP) rotates at rotational speed determined based on the wheel speed, and thus, during a reduction in wheel speed, the rotational speed (Nop) of the oil pump (OP) also decreases. According to the above-described configuration, when downshifting is performed during a reduction in wheel speed, the downshifting is performed in a time frame during which the rotational speed (Nop) of the oil pump (OP) is maintained higher than or equal to the reference rotational speed (NL). Here, the reference rotational speed (NL) is a lower limit of the rotational speed of the oil pump (OP) at which minimum hydraulic pressure required for transmission operation of the automatic transmission (2) is generated, and thus, by performing downshifting in a time frame such as that described above, hydraulic pressure required for downshifting operation is appropriately secured, enabling the downshifting operation to appropriately proceed. Note that in the downshifting, since a shift speed formed by the automatic transmission (2) shifts to the minimum shift speed having the largest gear ratio, drive power for the wheel (W1) can be appropriately secured upon start or acceleration of a vehicle (4) after performing the downshifting.

In addition, according to the above-described configuration, the time frame during which downshifting is performed is not only a time frame during which the rotational speed (Nop) of the oil pump (OP) is maintained higher than or equal to the reference rotational speed (NL), but also a time frame during which the rotational speed (Nop) of the oil pump (OP) is reduced to the reference rotational speed (NL) during a period from start to completion of downshifting operation. Thus, the rotational speed (Nop) of the oil pump (OP) upon performing downshifting can be reduced to the lowest possible level in a range in which the downshifting can be appropriately performed. By this, the amount of change in the rotational speed (Nmg) of the rotating electrical machine (MG) before and after the downshifting can be suppressed to a small level. As a result, in regeneration control performed during downshifting operation, the amount of correction (ΔT) in output torque (Tmg) from the rotating electrical machine (MG) for appropriate proceeding of the downshifting operation is suppressed to a small level, making it possible to secure a large amount of regeneration of deceleration energy.

As described above, according to the above-described configuration, upon deceleration of the vehicle (4), downshifting can be appropriately performed and a large amount of regeneration of deceleration energy can be secured.

In a configuration in which downshifting is performed in a time frame such as that described above, it is preferred that a point in time when the downshifting starts be determined based on a point in time when rotational speed (Nop) of the oil pump (OP) based on a change in the wheel speed is predicted to be reduced to the reference rotational speed (NL) and operating time which is time required for the operation of the downshifting.

According to this configuration, a point in time when downshifting starts can be appropriately determined such that the downshifting is performed in the above-described time frame, i.e., a time frame during which the rotational speed (Nop) of the oil pump (OP) is maintained higher than or equal to the reference rotational speed (NL) and reduced to the reference rotational speed (NL) during a period from start to completion of downshifting operation.

In a configuration in which a point in time when the downshifting starts is determined as described above, it is preferred that the downshifting start at a point in time ahead, by the operating time, of a point in time when the rotational speed (Nop) of the oil pump (OP) is predicted to be reduced to the reference rotational speed (NL).

According to this configuration, when the rotational speed (Nop) of the oil pump (OP) decreases according to a reduction in wheel speed, including also during downshifting operation, it becomes easy to reduce the rotational speed (Nop) of the oil pump (OP) upon performing downshifting to the lowest possible level in a range in which the downshifting can be appropriately performed.

In the control device (3) having each of the above-described configurations, it is preferred that a point in time when the downshifting starts be determined according to a level of reduction in the wheel speed such that rotational speed (Nop) of the oil pump (OP) upon start of the downshifting increases as the level of reduction increases.

According to this configuration, taking into account the fact that as the level of reduction in wheel speed increases, the reduction rate per unit time of the rotational speed (Nop) of the oil pump (OP) also increases, a point in time when downshifting starts can be appropriately determined such that the downshifting is performed in the above-described time frame.

In a configuration in which a point in time when the downshifting starts is determined according to the level of reduction as described above, it is preferred that operating time which is time required for the operation of the downshifting be predicted based on one or more determination indices including oil temperature, and a point in time when the downshifting starts be determined according to the level of reduction and the operating time such that rotational speed (Nop) of the oil pump (OP) upon start of the downshifting increases as the operating time increases.

According to this configuration, taking into account the fact that downshifting operating time changes depending on oil temperature, etc., a point in time when downshifting starts can be appropriately determined such that the downshifting is performed in the above-described time frame.

It is sufficient that the control device according to the present disclosure be able to provide at least one of the above-described advantageous effects.

### REFERENCE SIGNS LIST

1: Vehicle drive device, 2: Automatic transmission, 3: Control device, MG: Rotating electrical machine, NL: Reference rotational speed, Nmg: Rotational speed of the rotating electrical machine, Nop: Rotational speed of an oil pump, OP: Oil pump, Tmg: Output torque from the rotating electrical machine, and W1: First wheel (wheel)

## Claims

1. A control device whose control target is a vehicle drive device having an automatic transmission and an oil pump for driving the automatic transmission, the oil pump rotating at rotational speed determined based on wheel speed, the automatic transmission and the oil pump being provided in a power transmission path connecting a rotating electrical machine to a wheel, and the wheel speed being rotational speed of the wheel, wherein
regeneration by the rotating electrical machine is performed during transmission operation of the automatic transmission.

2. The control device according to claim 1, wherein during the transmission operation of the automatic transmission, control is performed to correct output torque from the rotating electrical machine such that the rotating electrical machine outputs torque for synchronizing rotational speed of the rotating electrical machine to rotational speed obtained after shifting a gear ratio of the automatic transmission.

3. The control device according to claim 1 or 2, wherein
when downshifting is performed during a reduction in the wheel speed with a shift speed having a smaller gear ratio than a minimum shift speed formed, the downshifting being shifting of a shift speed formed by the automatic transmission to the minimum shift speed, and the minimum shift speed being a shift speed having a largest gear ratio among a plurality of shift speeds that can be formed by the automatic transmission,
the downshifting is performed in a time frame during which rotational speed of the oil pump is maintained higher than or equal to a reference rotational speed and reduced to the reference rotational speed during a period from start to completion of operation of the downshifting, the reference rotational speed being a lower limit of rotational speed of the oil pump at which minimum hydraulic pressure required for the transmission operation of the automatic transmission is generated.

4. The control device according to claim 3, wherein a point in time when the downshifting starts is determined based on a point in time when rotational speed of the oil pump based on a change in the wheel speed is predicted to be reduced to the reference rotational speed and operating time, the operating time being time required for the operation of the downshifting.

5. The control device according to claim 4, wherein the downshifting starts at a point in time ahead, by the operating time, of a point in time when the rotational speed of the oil pump is predicted to be reduced to the reference rotational speed.

6. The control device according to any one of claims 3 to 5, wherein a point in time when the downshifting starts is determined according to a level of reduction in the wheel speed such that rotational speed of the oil pump upon start of the downshifting increases as the level of reduction increases.

7. The control device according to claim 6, wherein operating time is predicted based on one or more determination indices including oil temperature, and a point in time when the downshifting starts is determined according to the level of reduction and the operating time such that rotational speed of the oil pump upon start of the downshifting increases as the operating time increases, the operating time being time required for the operation of the downshifting.
